(19) **Europäisches Patentamt / European Patent Office / Office européen des brevets**

(11) **EP 4 354 342 A1**

(12) **EUROPEAN PATENT APPLICATION**
published in accordance with Art. 153(4) EPC

(43) Date of publication:
**17.04.2024   Bulletin 2024/16**

(21) Application number: **21945235.6**

(22) Date of filing: **24.09.2021**

(51) International Patent Classification (IPC):
**G06N 3/04** (2006.01)          **G06N 3/08** (2006.01)

(52) Cooperative Patent Classification (CPC):
**G06N 3/04; G06N 3/08**

(86) International application number:
**PCT/JP2021/034961**

(87) International publication number:
**WO 2022/259566 (15.12.2022 Gazette 2022/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:   **09.06.2021   JP 2021096588**

(71) Applicant: **KONICA MINOLTA, INC.**
**Tokyo 100-7015 (JP)**

(72) Inventor: **SEKII, Taiki**
**Tokyo 100-7015 (JP)**

(74) Representative: **MFG Patentanwälte**
**Meyer-Wildhagen Meggle-Freund**
**Gerhard PartG mbB**
**Amalienstraße 62**
**80799 München (DE)**

(54)   **NEURAL NETWORK SYSTEM**

(57)     To provide a neural network system capable of efficiently learning even in a case where a batch size is small. A neural network system includes a first layer, a second layer, and a numerical conversion layer, during training, the numerical conversion layer receives first layer outputs of a plurality of training data, calculates a numerical conversion parameter corresponding to each training data, numerically converting each component of each first layer output using the numerical conversion parameter to generate a numerical conversion layer output, and provides the second layer with the numerical conversion layer output as an input, and the numerical conversion parameter corresponding to one piece of training data is calculated from first layer outputs of a plurality of pieces of other training data except for the one piece of training data.

*FIG. 1*

**Description**

Technical Field

The present disclosure relates to a technique of enhancing a learning effect of a neural network.

Background Art

A neural network is used for image recognition, natural language processing, speech recognition, and the like. The neural network is a machine learning model that predicts an output for an input using a plurality of layers. In the neural network, the output of each layer is used as the input of the next layer of the network.

As a technique of enhancing the learning effect of such a neural network, a technique called batch normalization has been proposed (see, for example, Patent Literature 1).

Citation List

Patent Literature

Patent Literature 1: JP 6453477 B

Summary of Invention

Technical Problem

Batch normalization is a technique that contributes to learning stabilization and an improvement in learning speed by, in batch learning in which a plurality of pieces of training data are collectively processed, calculating a statistical value of a layer output, which is a batch normalization target, for each batch and normalizing the layer output using the calculated statistical value so as to obtain a mean of 0 and a variance of 1. However, in batch normalization, in a case where the batch size (the number of training data in one batch) is small, the effect of batch normalization is reduced, and learning may not proceed well.

The present disclosure has been made in view of the above problems, and an object thereof is to provide a neural network system capable of efficiently learning even in a case where a batch size is small.

Solution to Problem

A neural network system according to an aspect of the present disclosure is a neural network system that is implemented by one or a plurality of computers, the neural network system includes a first layer that generates a first layer output having a plurality of components, a second layer, and a numerical conversion layer between the first layer and the second layer, during training of the neural network system, the numerical conversion layer receives first layer outputs of a plurality of training data, calculates a numerical conversion parameter corresponding to each training data, numerically converting each component of each first layer output using the numerical conversion parameter to generate a numerical conversion layer output, and provides the second layer with the numerical conversion layer output as an input, and the numerical conversion parameter corresponding to one piece of training data is calculated from first layer outputs of a plurality of pieces of other training data except for the one piece of training data, or is calculated by weighting each first layer output of each of a plurality of pieces of training data including the one piece of training data, and a weight of the first layer output of the one piece of training data is smaller than weights of the first layer outputs of the plurality of pieces of other training data.

In the neural network system, the numerical conversion parameter corresponding to one piece of training data may be calculated from first layer outputs of a plurality of pieces of training data selected from a batch including a set of a plurality of pieces of training data including the one piece of training data by a predetermined selection method so as not to include the one piece of training data.

In the neural network system, a plurality of components of the first layer output may be indexed by a dimension, and calculating the numerical conversion parameter may include, for each training data in the batch, calculating, for each of the dimensions, a mean of components for the dimension of first layer outputs of a plurality of pieces of training data selected by the selection method as a pseudo mean of components for the dimension of the first layer outputs, and calculating, for each of the dimensions, a variance of components for the dimension of the first layer outputs using the component for the dimension of the first layer output and the pseudo mean for each training data of the batch.

In the neural network system, generating the numerical conversion layer output may include, for each training data, numerically converting the component of the first layer output of the training data using the pseudo mean and the variance for a dimension corresponding to each component.

In the neural network system, generating the numerical conversion layer output may further include transforming the component numerically converted based on values of a set of transformation parameters for each dimension.

In the neural network system, after the neural network system is trained, the numerical conversion layer may receive a new first layer output for a new neural network input generated by the first layer, generate a new numerically converted layer output by numerically converting each component of the new first layer output using a numerical conversion parameter calculated in advance, generates a new numerical conversion layer output by converting, for each dimension, a component of the new numerically converted layer output based on a set of transformation parameters for the dimension, and provide the second layer with the new numerical conversion layer output as a new layer input.

In the neural network system, the numerical conversion parameter calculated in advance may be calculated from a first layer output generated by the first layer during training of the neural network system.

In the neural network system, the numerical conversion parameter calculated in advance may be calculated from a first layer output generated by the first layer after the neural network system is trained.

In the neural network system, a new neural network input processed by the neural network system after the neural network system is trained may be an input of a different type from the training data used to train the neural network system.

In the neural network system, the plurality of components of the first layer output may be indexed by a feature index and a spatial location index, and calculating the numerical conversion parameter may include, for each training data of the batch, calculating, for each combination of a feature index and a spatial location index, a mean of components for the combination of first layer outputs of a plurality of pieces of training data selected by the selection method, for each training data of the batch, calculating, for each feature index, an arithmetic mean of the mean for a combination including the feature index, calculating, for each combination of a feature index and a spatial location index, a variance of a component for the combination of the first layer output using the component for the combination of the first layer output and the arithmetic mean of the mean for each training data of the batch, and calculating, for each feature index, an arithmetic mean of the variance for a combination including the feature index.

In the neural network system, generating the numerical conversion layer output may include, for each training data, numerically converting each component of the first layer output of the training data using the arithmetic mean of the mean and the arithmetic mean of the variance.

In the neural network system, generating the numerical conversion layer output may include converting the component numerically converted based on a set of transformation parameters for each feature index.

In the neural network system, after the neural network system is trained, the numerical conversion layer may receive a new first layer output for a new neural network input generated by the first layer, generate a new numerically converted layer output by numerically converting each component of the new first layer output using a numerical conversion parameter calculated in advance, generate a new numerical conversion layer output by converting, for each feature index, a component of the new numerically converted layer output based on a set of transformation parameters for the feature index, and provide the second layer with the new numerical conversion layer output as a new layer input.

In the neural network system, a plurality of components of the first layer output may be indexed by a feature index and a spatial location index, and calculating the numerical conversion parameter may include, for each training data in the batch, calculating, for each of the feature indexes, a mean of components for the feature index of first layer outputs of a plurality of training data selected by the selection method as a pseudo mean of components for the feature index of the first layer outputs, and calculating, for each of the dimensions, a variance of components for the feature index of the first layer outputs using the component for the feature index of the first layer output and the pseudo mean for each training data of the batch.

In the neural network system, generating the numerical conversion layer output may include, for each training data, numerically converting the component of the first layer output of the training data using the pseudo mean and the variance for a feature index corresponding to each component.

In the neural network system, generating the numerical conversion layer output may further include transforming the component numerically converted based on values of a set of transformation parameters for each feature index.

In the neural network system, after the neural network system is trained, the numerical conversion layer may receive a new first layer output for a new neural network input generated by the first layer, generate a new numerically converted layer output by numerically converting each component of the new first layer output using a numerical conversion parameter calculated in advance, generate a new numerical conversion layer output by converting, for each feature index, a component of the new numerically converted layer output based on a set of transformation parameters for the feature index, and provide the second layer with the new numerical conversion layer output as a new layer input.

In the neural network system, the first layer may generate the first layer output by modifying a first layer input based on a set of parameters for the first layer.

In the neural network system, the second layer may generate a second layer output by applying a nonlinear operation to the batch normalization layer output.

In the neural network system, the first neural network layer may generate the first layer output by modifying a first layer input based on current values of a set of parameters to generate a first layer input modified, and then applying a non-linear operation to the first layer input modified.

In the neural network system, during the training of the neural network, the neural network system may back propagate the numerical conversion parameter as part of adjusting a value of a parameter of the neural network.

In the neural network system, the predetermined selection method in calculating the numerical conversion parameter corresponding to one piece of training data may select, from a batch including a set of a plurality of pieces of training data including the one piece of training data, some training data except for the one piece of training data or all the training data.

Advantageous Effects of Invention

According to the neural network system of the present disclosure, learning efficiency can be improved even in a case where the batch size is small.

Brief Description of Drawings

Fig. 1 is a block diagram illustrating a configuration of a neural network system 200.
Fig. 2 is a diagram illustrating an example of a data structure of a training data group 300.
Fig. 3 is a diagram for explaining an input of a numerical conversion layer 220 and an output of a numerical training layer 220 in the neural network system 200 during inference.
Fig. 4 is a diagram for explaining an input of the numerical conversion layer 220 and an output of the numerical training layer 220 in the neural network system 200 during training.
Fig. 5 is a diagram illustrating an example of a method of calculating a pseudo mean.
Fig. 6 is a diagram illustrating an example of a method of calculating a pseudo variance.
Fig. 7 is a diagram illustrating an example of a numerical conversion method of a first layer output.
Fig. 8 is a diagram illustrating an example of a flow for generating a numerical conversion layer output during training of the neural network system 200.
Fig. 9 is a diagram illustrating an example of a flow for generating a numerical conversion layer output when an inference result for a new input is generated after the neural network system 200 is trained.
Fig. 10 is a diagram illustrating a modification of the method of calculating the pseudo mean.
Fig. 11 is a diagram illustrating a modification of the method of calculating the pseudo mean.
Fig. 12 is a diagram illustrating a modification of the method of calculating the pseudo mean.

Description of Embodiments

1. First Embodiment

Hereinafter, a neural network system 200 according to a first embodiment will be described.

1.1 Configuration

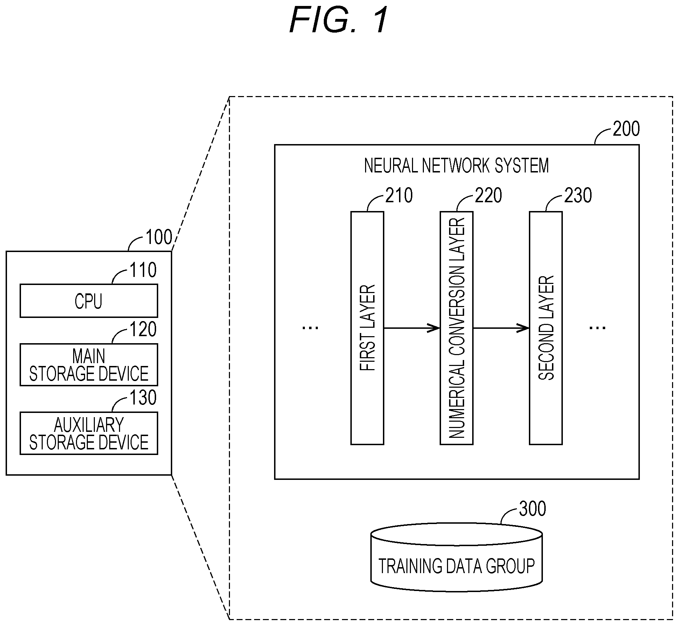

Fig. 1 is a block diagram illustrating a configuration of a neural network system 200. As illustrated in the figure, the neural network system 200 is implemented by one or a plurality of computers 100 including a CPU 110, a main storage device 120, and an auxiliary storage device 130. Computer programs and data stored in the auxiliary storage device 130 are loaded into the main storage device 120, and by the CPU 110 operating in accordance with the computer programs and data loaded into the main storage device 120, the neural network system 200 is implemented. As an example, the auxiliary storage device 130 includes a hard disk. The auxiliary storage device 130 may include a nonvolatile semiconductor memory.

The neural network system 200 includes a plurality of neural network layers arranged in sequence. The plurality of neural network layers include a first layer 210, a numerical conversion layer 220, and a second layer 230. An input to the neural network system 200 is input to the lowest neural network layer, the output of each layer is the next layer input, and the output of the highest layer is the output of the neural network system 200.

Each neural network layer performs calculations using parameters on data including a plurality of components received as an input to generate an output having a plurality of components. These parameters are predetermined by learning (training) of the neural network system 200.

The neural network system 200 can use any digital data having a plurality of components as an input and is configured to output any inference results based on the input.

For example, the input of the neural network system 200 may be image data, audio data, or text data, and may be feature data extracted from image data, audio data, or text data.

In a case where the input to the neural network system 200 is image data or feature data extracted from image data, the output of the neural network system 200 may be a score for each of a plurality of objects (the likelihood that the object is estimated to be included in the image data).

In a case where the input to the neural network system 200 is audio data or feature data extracted from audio data, the output of the neural network system 200 may be a score for each of a plurality of keywords (the likelihood that the keyword is estimated to be uttered in the audio data).

In a case where the input to the neural network system 200 is text data or feature data extracted from text data, the output of the neural network system 200 may be a score for each of a plurality of topics (the likelihood that the topic is estimated to be the subject of the text data).

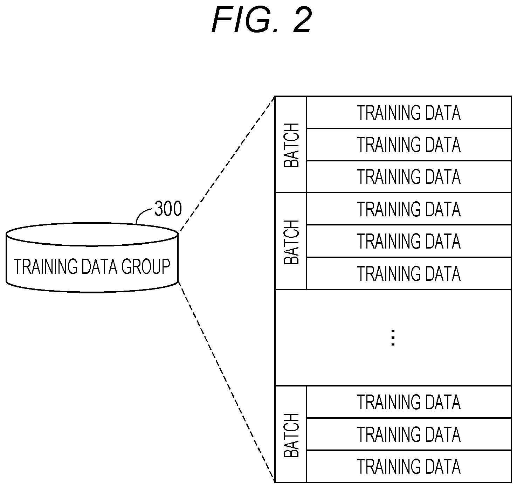

The auxiliary storage device 130 stores a training data group 300 used for learning of the neural network system 200. As illustrated in Fig. 2, the training data group 300 has a data structure including a plurality of batches each of which includes a plurality of pieces of training data. Here, the batch size is described as three, but the batch size is not limited to three. Each of the training data is digital data having a plurality of components, as described above.

The neural network system 200 performs training using each training data included in the training data group 300 to determine parameters for each neural network layer, and processes the newly received input data in each neural network layer using the parameters determined in the training to output an inference result for the new input data.

The neural network system 200 includes the numerical conversion layer 220 instead of a batch normalization layer in a neural network system that performs conventional batch normalization, and performs numerical conversion processing instead of batch normalization processing. Other parts are similar to those of the neural network system that performs conventional batch normalization (see, for example, Patent Literature 1), and description thereof is omitted.

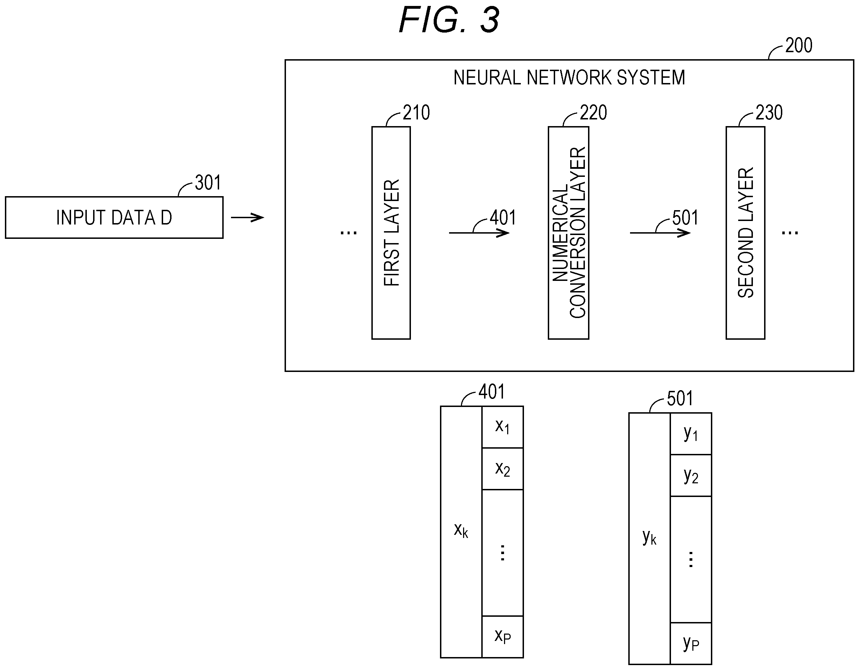

Fig. 3 is a diagram for explaining an output of the first layer 210 (an input of the numerical conversion layer 220) and an input of the second layer 230 (an output of the numerical training layer 220) in the neural network system 200 during inference.

As illustrated in the figure, the first layer 210 outputs a first layer output 401 (first layer output x) for new input data 301 (input data D) and inputs the first layer output to the numerical conversion layer 220. The numerical conversion layer 220 outputs a numerical conversion layer output 501 (numerical conversion layer output y) for the first layer output x and inputs the numerical conversion layer output to the second layer 230.

The first layer 210 is a layer that generates an output including a plurality of (for example, P) components indexed by dimension. That is, in Fig. 3, the first layer output x has P components ($x_1$, $x_2$, ......, $x_P$) individually corresponding to the P dimensions. In addition, the numerical conversion layer output y has P components ($y_1$, $y_2$, ......, $y_P$) individually corresponding to the P dimensions.

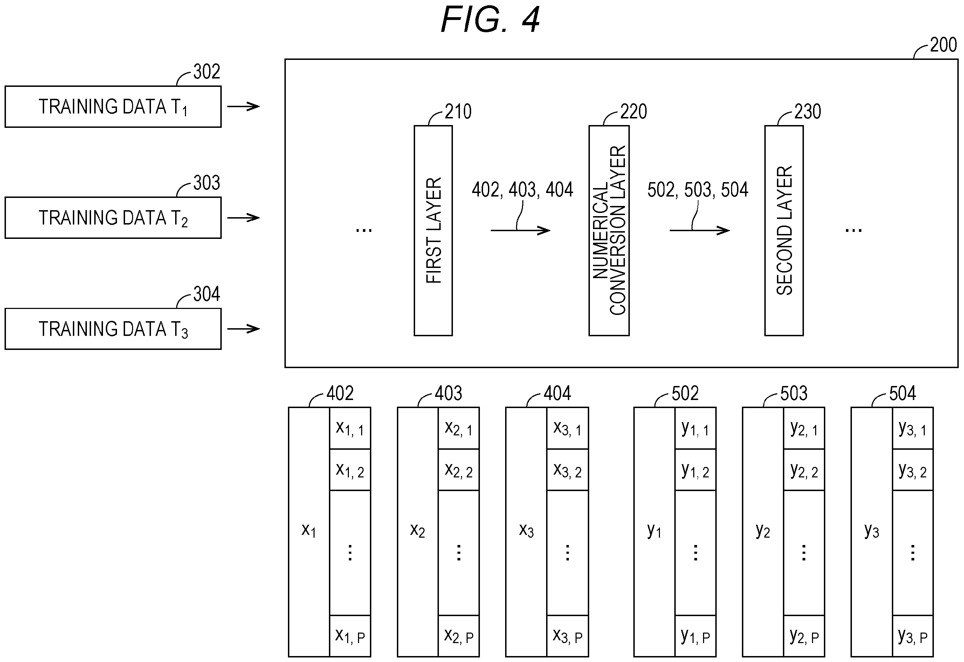

Fig. 4 is a diagram for explaining an output of the first layer 210 and an input of the second layer 230 in the neural network system 200 during training.

As illustrated in the figure, in order to perform batch learning that collectively processes a plurality of pieces of training data, the first layer 210 outputs first layer outputs 402, 403, and 404 (first layer outputs x1, x2, and x3) for training data 302, 303, and 304 (training data $T_1$, $T_2$, and $T_3$) and inputs the first layer outputs to the numerical conversion layer 220. The numerical conversion layer 220 outputs numerical conversion layer outputs 502, 503, and 504 (numerical conversion layer outputs y1, y2, and y3) for the first layer outputs x1, x2, and x3, and inputs the numerical conversion layer outputs to the second layer 230.

In Fig. 4, the first layer output x1 has P components ($x_{1,1}$ $x_{1,2}$, ......, $x_{1,P}$) individually corresponding to the P dimensions. Similarly, the first layer output x2 has P components ($x_{2,1}$, $x_{2,2}$, ......, $x_{2,P}$) individually corresponding to the P dimensions, and the first layer output x3 has P components ($x_{2,1}$, $x_{2,2}$, ......, $x_{2,P}$) individually corresponding to the P dimensions. In addition, the numerical conversion layer output y1 has P components ($y_{1,1}$ $y_{1,2}$, ....., $y_{1,P}$) individually corresponding to the P dimensions. Similarly, the numerical conversion layer output y2 has P components ($y_{2,1}$, $y_{2,2}$, ......, $y_{2,P}$) individually corresponding to the P dimensions, and the numerical conversion layer output y3 has P components ($y_{3,1}$, $y_{3,2}$, ......, $y_{3,P}$) individually corresponding to the P dimensions.

A conventional batch normalization layer normalizes, for each dimension, a component of a first layer output corresponding to the dimension by using statistical parameters. The numerical conversion layer 220 of the present disclosure also numerically converts, for each dimension, a component of the first layer output corresponding to the dimension by using numerical conversion parameters.

Hereinafter, a method of calculating the numerical conversion parameters calculated in the numerical conversion layer 220 during training will be described. The numerical conversion layer 220 calculates a pseudo mean for each training data and calculates a pseudo variance for each batch. A method of calculating the pseudo mean and the pseudo variance corresponding to the p-th dimension will be described. The pseudo means and the pseudo variances corresponding to other dimensions are similarly calculated.

By performing batch learning, the numerical conversion layer 220 receives a component 411 (component $x_{1,p}$), a component 412 ($x_{2,p}$), and a component 413 ($x_{3,p}$) for the p-th dimension of the first layer outputs corresponding to training data 311,312,313 (training data T1, T2, and T3).

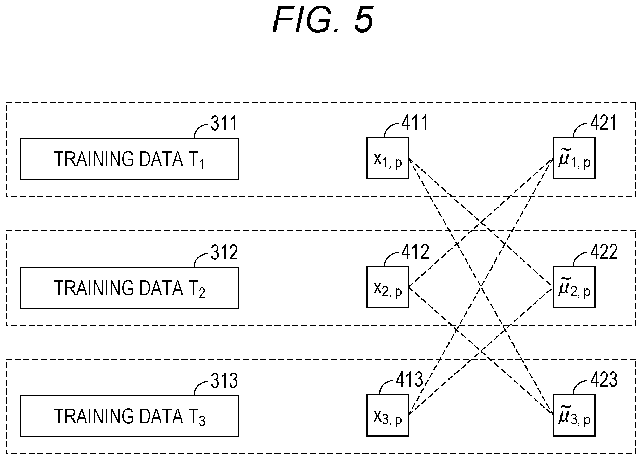

Fig. 5 illustrates a method of calculating a pseudo mean calculated for each training data.

A pseudo mean 421 corresponding to the training data T1 is calculated by the following formula using $x_{2,p}$ and $x_{3,p}$ except for $x_{1,p}$ corresponding to the training data T1, among $x_{1,p}$, $x_{2,p}$, and $x_{3,p}$ received by the numerical conversion layer 220.

[Mathematical Formula 1]

$$\tilde{\mu}_{1,p} = \frac{1}{2}\left(x_{2,p} + x_{3,p}\right)$$

A pseudo mean 422 corresponding to the training data T2 is calculated by the following formula using $x_{1,p}$ and $x_{3,p}$ except for $x_{2,p}$ corresponding to the training data T2, among $x_{1,p}$, $x_{2,p}$, and $x_{3,p}$ received by the numerical conversion layer 220.

[Mathematical Formula 2]

$$\tilde{\mu}_{2,p} = \frac{1}{2}\left(x_{1,p} + x_{3,p}\right)$$

A pseudo mean 423 corresponding to the training data T3 is calculated by the following formula using $x_{1,p}$ and $x_{2,p}$ except for $x_{3,p}$ corresponding to the training data T3, among $x_{1,p}$, $x_{2,p}$, and $x_{3,p}$ received by the numerical conversion layer 220.

[Mathematical Formula 3]

$$\tilde{\mu}_{3,p} = \frac{1}{2}\left(x_{1,p} + x_{2,p}\right)$$

In this manner, as the pseudo mean corresponding to one piece of training data of the plurality of pieces of training data in the batch, the mean of the components of the first layer outputs of the other training data except for the one piece of training data in the batch is calculated.

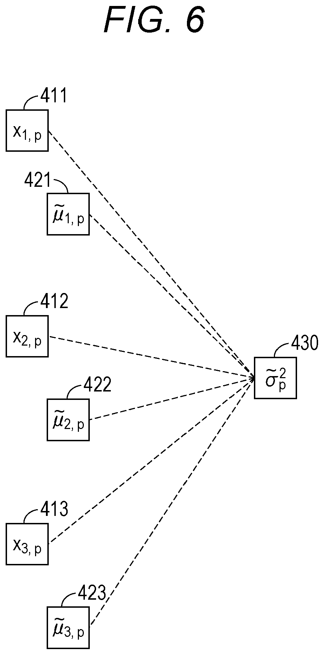

Fig. 6 illustrates a method of calculating a pseudo variance calculated for each batch.

A pseudo variance 430 is calculated by the following formula using $x_{1,p}$, $x_{2,p}$, and $x_{3,p}$ received by the numerical conversion layer 220 and the calculated pseudo means 421, 422, and 423.

[Mathematical Formula 4]

$$\tilde{\sigma}^2 = \frac{1}{3}\left\{\left(x_{1,p} - \tilde{\mu}_{1,p}\right)^2 + \left(x_{2,p} - \tilde{\mu}_{2,p}\right)^2 + \left(x_{3,p} - \tilde{\mu}_{3,p}\right)^2\right\}$$

In this manner, the pseudo variance is calculated by calculating the formula for obtaining variance in the statistics using the difference between the first layer output and the corresponding pseudo mean instead of the deviation between each sample value (each component of the first layer output) and the mean.

The numerical conversion layer 220 performs numerical conversion on the components of the first layer output using the pseudo mean and the pseudo variance calculated in this manner to generate a numerical conversion output.

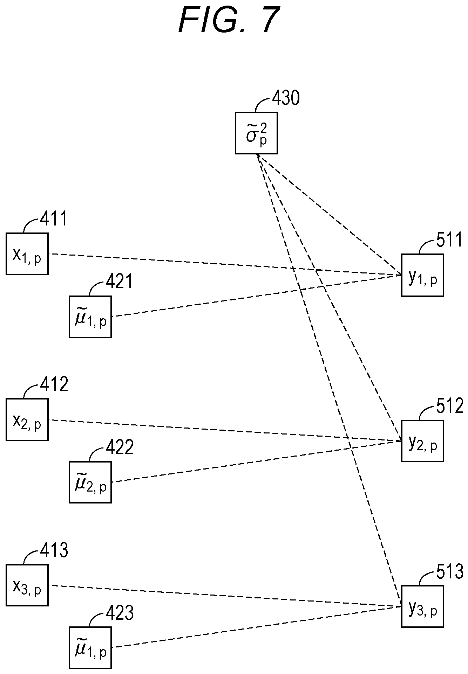

Fig. 7 illustrates a method of generating a numerical conversion output. For example, the first layer output 411 corresponding to the training data T1 is numerically converted by the following formula to generate a numerical conversion

layer output 511.

[Mathematical Formula 5]

$$y_{1,p} = \frac{x_{1,p} - \tilde{\mu}_{1,p}}{\tilde{\sigma}}$$

Similarly, the first layer output 412 corresponding to the training data T2 is numerically converted by the following formula to generate a numerical conversion layer output 512.

[Mathematical Formula 6]

$$y_{2,p} = \frac{x_{2,p} - \tilde{\mu}_{2,p}}{\tilde{\sigma}}$$

In addition, the first layer output 413 corresponding to the training data T3 is numerically converted by the following formula to generate a numerical conversion layer output 513.

[Mathematical Formula 7]

$$y_{3,p} = \frac{x_{3,p} - \tilde{\mu}_{3,p}}{\tilde{\sigma}}$$

During training, the numerical calculation layer 220 performs the numerical conversion, that is, subtracts the corresponding pseudo mean from the first layer output and divides it by the positive square root of the pseudo variance to calculate the numerical calculation layer outputs 511, 512, 513, and provide these outputs to the second layer. By performing the numerical conversion on the first layer output using the pseudo mean and the pseudo variance instead of the mean and variance in the conventional neural network system, as in the conventional neural network system, the numerical calculation layer outputs 511, 512, and 513 are normalized so as to obtain a mean of 0 and a variance of 1, and efficiency of the learning effect can be enhanced.

1.2 Operation

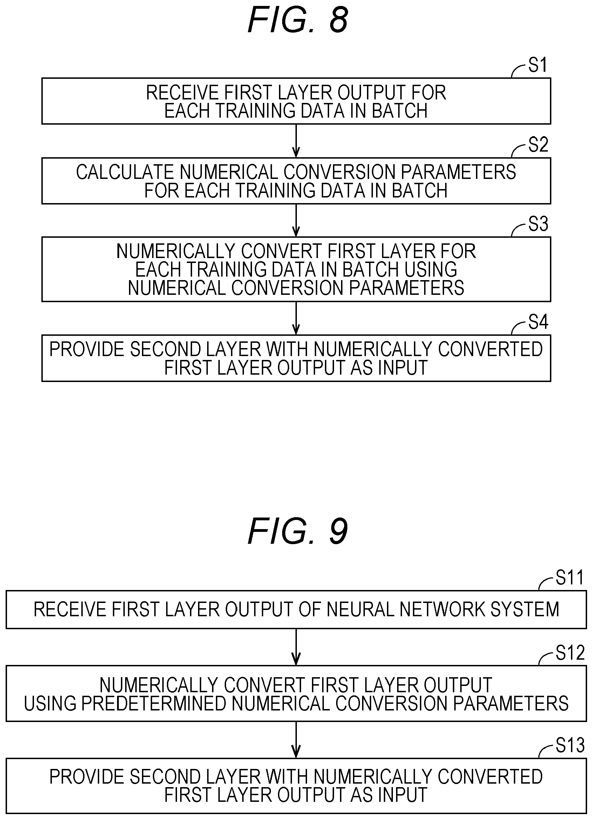

Fig. 8 is a diagram illustrating an example of a flow for generating a numerical conversion layer output during training of the neural network system 200.
The numerical conversion layer 220 receives a first layer output (step S1). The first layer output includes an individual output generated by the first layer 210 for each training data in a batch.
The numerical conversion layer 220 calculates numerical conversion parameters (step S2). As the numerical conversion parameters, a pseudo mean is calculated for each training data in the batch, and a pseudo variance is calculated for the batch.
The numerical conversion layer 220 numerically converts the first layer output for each training data in the batch using the calculated numerical conversion parameters to generate a numerical conversion layer output (step S3).
The numerical conversion layer 220 provides a second layer with the numerical conversion layer output as an input (step S4).
Fig. 9 is a diagram illustrating an example of a flow for generating a numerical conversion layer output when an inference result for a new input is generated after the neural network system 200 is trained.
The numerical conversion layer 220 receives a first layer output for a new output (step S11).
The numerical conversion layer 220 numerically converts the first layer output for the new input using predetermined numerical conversion parameters to generate a numerical conversion layer output (step S12). These numeral conversion parameters may be determined on the basis of the first layer output generated in the first layer 210 during training of the neural network system 200, or may be determined on the basis of the first layer output generated in the first layer 210 for another input data after training.
The numerical conversion layer 220 provides the second layer with a numerical conversion layer output for the new input as an input (step S13).

1.3 Effects

Focusing on each training data, in the conventional batch normalization, the first layer output of the training data of interest is always included in the calculation of the statistical values for normalization. In a case where the batch size is small, the proportion of the first layer output of the training data of interest in the calculation of the statistical values is large. Therefore, from the viewpoint of the training data of interest, the statistical values calculated from a less varying batch largely affected by its own value are used, and there is a possibility that the effect of normalization is reduced.

On the other hand, according to the method of the present disclosure, since the numerical conversion parameter (pseudo mean) for numerical conversion is calculated by excluding the first layer output of the training data of interest, the influence of its own value on the numerical conversion parameter can be suppressed, and the effect of numerical conversion (effect similar to normalization) is obtained even in a case where the batch size is small.

2. Supplements

Although the present disclosure has been described based on the embodiment, it is needless to say that the present disclosure is not limited to the above embodiment and that the following modifications are included in the technical scope of the present invention.

(1) In the above embodiment, the pseudo mean corresponding to one piece of training data of a plurality of pieces of training data in a batch is calculated using first layer outputs of all the other training data except for the one piece of training data in the batch, but it is not limited thereto. For example, the calculation may be performed using the first layer outputs of some selected training data among the other training data except for the one piece of training data in the batch.

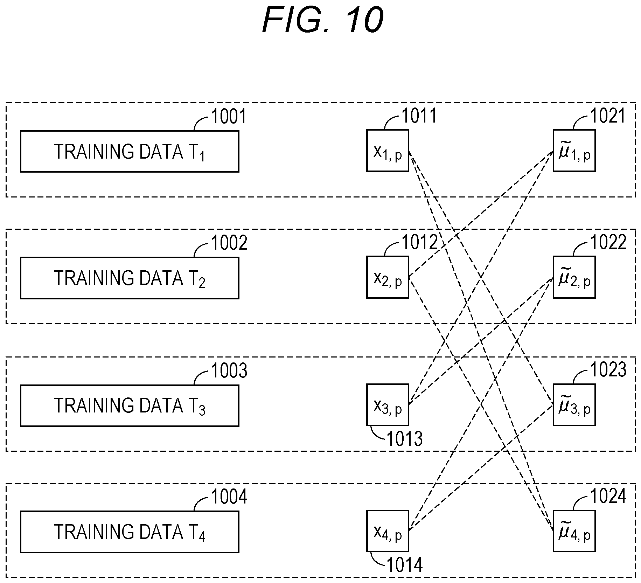

Fig. 10 illustrates a method of calculating a pseudo mean different from that of the embodiment. Here, it is assumed that the batch size is four and the training data in a batch includes pieces of training data 1001, 1002, 1003, and 1004 (training data T1, T2, T3, and T4). A method of calculating the pseudo mean and the pseudo variance corresponding to the p-th dimension will be described, but the pseudo means corresponding to other dimensions are similarly calculated.

By performing batch learning, the numerical conversion layer 220 receives a component 1011 (component $x_{1,p}$), a component 1012 ($x_{2,p}$), a component 1013 ($x_{3,p}$), and a component 1014 ($x_{4,p}$) for the p-th dimension of the first layer outputs corresponding to the training data T1, T2, T3, and T4).

A pseudo mean 1021 corresponding to the training data T1 is calculated by the following formula using $x_{2,p}$ and $x_{3,p}$ selected from $x_{2,p}$, $x_{3,p}$, and $x_{4,p}$ except for $x_{1,p}$ corresponding to the training data T1, among $x_{1,p}$, $x_{2,p}$, $x_{3,p}$, and $x_{4,p}$ received by the numerical conversion layer 220.

[Mathematical Formula 8]

$$\tilde{\mu}_{1,p} = \frac{1}{2}\left(x_{2,p} + x_{3,p}\right)$$

A pseudo mean 1022 corresponding to the training data T2 is calculated by the following formula using $x_{3,p}$ and $x_{4,p}$ selected from $x_{1,p}$, $x_{3,p}$, and $x_{4,p}$ except for $x_{2,p}$ corresponding to the training data T2, among $x_{1,p}$, $x_{2,p}$, $x_{3,p}$, and $x_{4,p}$ received by the numerical conversion layer 220.

[Mathematical Formula 9]

$$\tilde{\mu}_{2,p} = \frac{1}{2}\left(x_{3,p} + x_{4,p}\right)$$

A pseudo mean 1023 corresponding to the training data T3 is calculated by the following formula using $x_{1,p}$ and $x_{4,p}$ selected from $x_{1,p}$, $x_{2,p}$, and $x_{4,p}$ except for $x_{3,p}$ corresponding to the training data T3, among $x_{1,p}$, $x_{2,p}$, $x_{3,p}$, and $x_{4,p}$ received by the numerical conversion layer 220.

[Mathematical Formula 10]

$$\tilde{\mu}_{3,p} = \frac{1}{2}\left(x_{1,p} + x_{4,p}\right)$$

A pseudo mean 1024 corresponding to the training data T4 is calculated by the following formula using $x_{1,p}$ and $x_{2,p}$ selected from $x_{1,p}$, $x_{2,p}$, and $x_{3,p}$ except for $x_{4,p}$ corresponding to the training data T4, among $x_{1,p}$, $x_{2,p}$, $x_{3,p}$, and $x_{4,p}$ received by the numerical conversion layer 220.

[Mathematical Formula 11]

$$\tilde{\mu}_{4,p} = \frac{1}{2}\left(x_{1,p} + x_{2,p}\right)$$

In this manner, as the pseudo mean corresponding to one piece of training data of the plurality of pieces of training data in the batch, the mean of the components of the first layer outputs of the training data selected from the other training data except for the one piece of training data in the batch is calculated. In a method of selecting some training data from the other training data except for the one piece of training data, the training data may be selected randomly or may be selected in accordance with a predetermined rule. In the above example, the training data is selected in a manner that the mean of the pseudo means 1021 to 1024 matches the mean of the first layer outputs $x_{1,p}$, $x_{2,p}$, $x_{3,p}$, and $x_{4,p}$.

In the conventional batch normalization, there is a possibility that the effect is reduced in a case where the batch size is extremely large, but according to this method, there is a possibility that a decrease in the effect due to the extremely large batch size can be suppressed.

(2) In the above embodiment, the pseudo mean corresponding to one piece of training data of a plurality of pieces of training data in a batch is calculated using first layer outputs of all the other training data except for the one piece of training data in the batch, but it is not limited thereto. For example, the pseudo mean may be calculated using the first layer output of the training data in another batch.

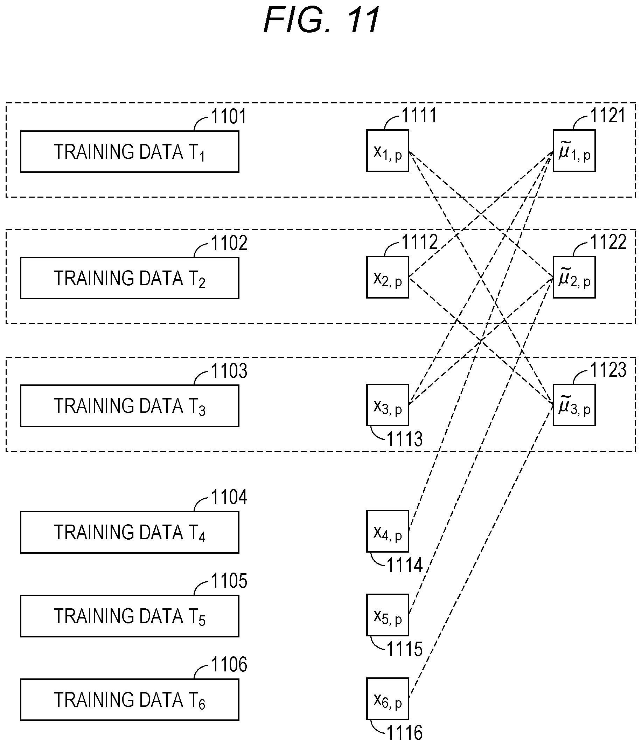

Fig. 11 illustrates a method of calculating a pseudo mean different from that of the embodiment. Here, it is assumed that the batch size is three, the training data of a first batch includes pieces of training data 1101, 1102, and 1103 (training data T1, T2, and T3), and the training data of a second batch includes pieces of training data 1104, 1105, and 1106 (training data T4, T5, and T6). A method of calculating the pseudo mean and the pseudo variance corresponding to the p-th dimension will be described, but the pseudo means corresponding to other dimensions are similarly calculated.

In the learning of the first batch, the numerical conversion layer 220 receives a component 1111 (component $x_{1,p}$), a component 1112 ($x_{2,p}$), and a component 1113 ($x_{3,p}$) for the p-th dimension of the first layer outputs corresponding to the training data T1, T2, and T3 of the first batch and a component 1114 (component $x_{1,p}$), a component 1115 ($x_{2,p}$), and a component 1116 ($x_{3,p}$) for the p-th dimension of the first layer outputs corresponding to the training data T4, T5, and T6 of the second batch.

A pseudo mean 1121 corresponding to the training data T1 is calculated by the following formula using $x_{2,p}$, $x_{3,p}$, and $x_{4,p}$ selected from $x_{2,p}$, $x_{3,p}$, $x_{4,p}$, $x_{5,p}$, and $x_{6,p}$ except for $x_{1,p}$ corresponding to the training data T1, among $x_{1,p}$, $x_{2,p}$, $x_{3,p}$, $x_{4,p}$, $x_{5,p}$, and $x_{6,p}$ received by the numerical conversion layer 220.

[Mathematical Formula 12]

$$\tilde{\mu}_{1,p} = \frac{1}{3}\left(x_{2,p} + x_{3,p} + x_{4,p}\right)$$

A pseudo mean 1122 corresponding to the training data T2 is calculated by the following formula using $x_{1,p}$, $x_{2,p}$, and $x_{6,p}$ selected from $x_{1,p}$, $x_{3,p}$, $x_{4,p}$, $x_{5,p}$, and $x_{6,p}$ except for $x_{2,p}$ corresponding to the training data T2, among $x_{1,p}$, $x_{2,p}$, $x_{3,p}$, $x_{4,p}$, $x_{5,p}$, and $x_{6,p}$ received by the numerical conversion layer 220.

[Mathematical Formula 13]

$$\tilde{\mu}_{2,p} = \frac{1}{3}\left(x_{1,p} + x_{2,p} + x_{5,p}\right)$$

A pseudo mean 1123 corresponding to the training data T2 is calculated by the following formula using $x_{1,p}$, $x_{2,p}$, and $x_{6,p}$ selected from $x_{1,p}$, $x_{3,p}$, $x_{4,p}$, $x_{5,p}$, and $x_{6,p}$ except for $x_{2,p}$ corresponding to the training data T2, among $x_{1,p}$, $x_{2,p}$, $x_{3,p}$, $x_{4,p}$, $x_{5,p}$, and $x_{6,p}$ received by the numerical conversion layer 220.

[Mathematical Formula 14]

$$\tilde{\mu}_{3,p} = \frac{1}{3}\left(x_{1,p} + x_{2,p} + x_{5,p}\right)$$

In this manner, as the pseudo mean corresponding to one piece of training data of the plurality of pieces of training data, the mean of the components of the first layer outputs of the training data selected from the other training data except for the one piece of training data is calculated. In a method of selecting some training data from the other training data except for the one piece of training data, the training data may be selected randomly or may be selected in accordance with a predetermined rule.

With this pseudo mean calculation method, the value of the pseudo mean calculated and the value of the pseudo variance calculated using the pseudo mean have suppressed influence of the first layer output of the one piece of training data, and the learning effect can be expected to be improved even in a case where the batch size is small.

(3) In the above embodiment, the pseudo mean corresponding to one piece of training data of a plurality of pieces of training data in a batch is calculated using first layer outputs of all the other training data except for the one piece of training data in the batch, but it is not limited thereto. For example, the pseudo mean may be calculated using the first layer outputs of the plurality of pieces of training data including the one piece of training data.

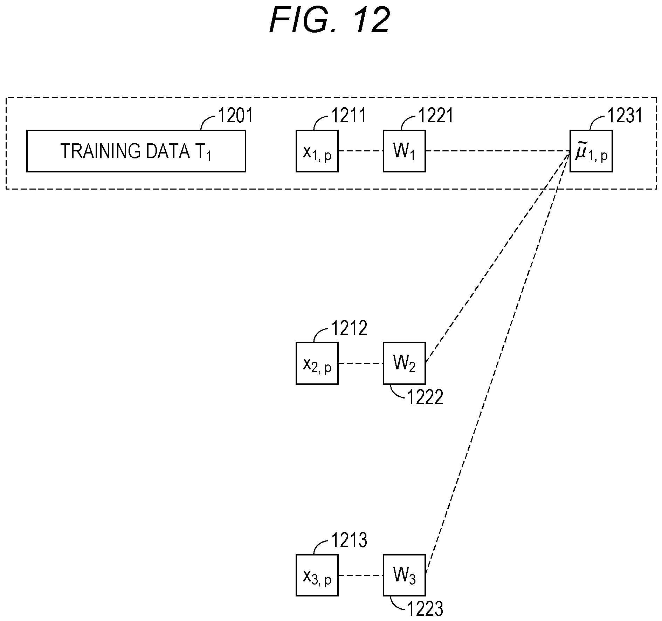

Fig. 12 illustrates a method of calculating a pseudo mean different from that of the embodiment. Here, it is assumed that the batch size is three and the training data in a batch includes pieces of training data 1201, 1202, and 1103 (training data T1, T2, and T3). A method of calculating the pseudo mean and the pseudo variance corresponding to the p-th dimension will be described, but the pseudo means corresponding to other dimensions are similarly calculated.

In batch learning, the numerical conversion layer 220 receives a component 1211 (component $x_{1,p}$), a component 1212 ($x_{2,p}$), and a component 1213 ($x_{3,p}$) for the p-th dimension of the first layer outputs corresponding to the training data T1, T2, and T3 of a first batch.

A pseudo mean 1231 corresponding to the training data T1 is calculated by the following formula using $x_{1,p}$, $x_{2,p}$, and $x_{3,p}$ received by the numerical conversion layer 220.

[Mathematical Formula 15]

$$\tilde{\mu}_{1,p} = \frac{1}{w_1 + w_2 + w_3}\left(w_1 \cdot x_{2,p} + w_2 \cdot x_{3,p} + w_3 \cdot x_{4,p}\right)$$

where w1, w2, and w3 are predetermined weights, and the weight w1 corresponding to the training data T1 is smaller than the weights corresponding to the other training data.

In this manner, as the pseudo mean corresponding to one piece of training data of the plurality of pieces of training data, the weighted average of the components of the first layer outputs of the plurality of pieces of training data including the one piece of training data. In this case, it is assumed that the weight attached to the first layer output of the one piece of training data is smaller than the weights attached to the first layer outputs of the other training data.

With this pseudo mean calculation method, the value of the pseudo mean calculated and the value of the pseudo variance calculated using the pseudo mean have suppressed influence of the first layer output of the one piece of training data, and the learning effect can be expected to be improved even in a case where the batch size is small.

(4) In the above embodiment, the first layer 210 may be a neural network layer that generates an output including a plurality of components that are each indexed by both a feature index and a spatial location index.

In this case, the numerical conversion layer 220 calculates, for each combination of the feature index and the spatial location index, a pseudo mean and a pseudo variance of the components of the first layer output having the feature index and the spatial location index. The numerical conversion layer 220 calculates, for each feature index, the arithmetic mean of a pseudo mean for a combination of the feature index and a spatial location index including the feature index. The numerical conversion layer 220 calculates, for each feature index, the arithmetic mean of a pseudo variance for a combination of the feature index and a spatial location index including the feature index.

The numerical conversion layer 220 numerically converts each component of each of the outputs of the first layer 210 using the calculated arithmetic mean and arithmetic variance to generate a numerically converted output for each of the training data in the batch. The numerical conversion layer 220 normalizes each component using the calculated arithmetic mean and arithmetic variance in the same manner as when generating an output indexed by the dimension in the above embodiment.

(5) For the p-th dimension, $z_p = \gamma_p y_p + A_p$ obtained by transforming the component $y_p$ numerically converted using the pseudo mean and the pseudo variance using parameters $\gamma_p$ and $A_p$ for the p-th dimension may be provided to the second layer 230 as an output of the numerical conversion layer. The parameters $\gamma_p$ and $A_p$ may be constants or may be parameters defined by training of neural network system 200.

(6) The inputs of the neural network system 200 may be of different types of inputs during training and during inference. For example, user images may be trained as training data to infer video frames.

(7) In the above embodiment, the first layer 210 may generate an output by modifying an input to the first layer based on values of a set of parameters for the first layer. In addition, the second layer 230 may receive the output of the numerical conversion layer 220 and apply a nonlinear operation, that is, a nonlinear activation function to a numerical conversion layer output to generate an output. Furthermore, the first layer 210 may generate a modified first layer input by modifying the layer input based on the values of a set of parameters for the first layer, and generate an output by applying the non-linear operation to the modified first layer input before providing the numerical conversion layer 220 with the output.

Industrial Applicability

The present disclosure is useful for a neural network system that performs image recognition, natural language processing, speech recognition, and the like.

Reference Signs List

| | |
|---|---|
| 200 | neural network system |
| 210 | first layer |
| 220 | numerical conversion layer |
| 230 | second layer |

**Claims**

1. A neural network system implemented by one or a plurality of computers, comprising:

   a first layer that generates a first layer output having a plurality of components;
   a second layer; and
   a numerical conversion layer between the first layer and the second layer, wherein
   during training of the neural network system, the numerical conversion layer receives first layer outputs of a plurality of training data,
   calculates a numerical conversion parameter corresponding to each training data,
   numerically converting each component of each first layer output using the numerical conversion parameter to generate a numerical conversion layer output, and
   provides the second layer with the numerical conversion layer output as an input, and
   the numerical conversion parameter corresponding to one piece of training data is calculated from first layer outputs of a plurality of pieces of other training data except for the one piece of training data, or is calculated by weighting each first layer output of each of a plurality of pieces of training data including the one piece of training data, and a weight of the first layer output of the one piece of training data is smaller than weights of the first layer outputs of the plurality of pieces of other training data.

2. The neural network system according to claim 1, wherein the numerical conversion parameter corresponding to one piece of training data is calculated from first layer outputs of a plurality of pieces of training data selected from a batch including a set of a plurality of pieces of training data including the one piece of training data by a predetermined selection method so as not to include the one piece of training data.

3. The neural network system according to claim 2, wherein

a plurality of components of the first layer output are indexed by a dimension, and
calculating the numerical conversion parameter includes
for each training data in the batch, a step of calculating, for each of the dimensions, a mean of components for the dimension of first layer outputs of a plurality of pieces of training data selected by the selection method as a pseudo mean of components for the dimension of the first layer outputs, and
a step of calculating, for each of the dimensions, a variance of components for the dimension of the first layer outputs using the component for the dimension of the first layer output and the pseudo mean for each training data of the batch.

4. The neural network system according to claim 3, wherein generating the numerical conversion layer output includes, for each training data, a step of numerically converting the component of the first layer output of the training data using the pseudo mean and the variance for a dimension corresponding to each component.

5. The neural network system according to claim 4, wherein generating the numerical conversion layer output further includes a step of transforming the component numerically converted based on values of a set of transformation parameters for each dimension.

6. The neural network system according to claim 5, wherein

after the neural network system is trained, the numerical conversion layer receives a new first layer output for a new neural network input generated by the first layer,
generates a new numerically converted layer output by numerically converting each component of the new first layer output using a numerical conversion parameter calculated in advance,
generates a new numerical conversion layer output by converting, for each dimension, a component of the new numerically converted layer output based on a set of transformation parameters for the dimension, and
provides the second layer with the new numerical conversion layer output as a new layer input.

7. The neural network system according to claim 6, wherein the numerical conversion parameter calculated in advance is calculated from a first layer output generated by the first layer during training of the neural network system.

8. The neural network system according to claim 6, wherein the numerical conversion parameter calculated in advance is calculated from a first layer output generated by the first layer after the neural network system is trained.

9. The neural network system according to claim 7, wherein a new neural network input processed by the neural network system after the neural network system is trained is an input of a different type from the training data used to train the neural network system.

10. The neural network system according to claim 2, wherein

the plurality of components of the first layer output are indexed by a feature index and a spatial location index,
calculating the numerical conversion parameter includes
for each training data of the batch, a step of calculating, for each combination of a feature index and a spatial location index, a mean of components for the combination of first layer outputs of a plurality of pieces of training data selected by the selection method,
for each training data of the batch, a step of calculating, for each feature index, an arithmetic mean of the mean for a combination including the feature index,
a step of calculating, a step of calculating, for each combination of a feature index and a spatial location index, a variance of a component for the combination of the first layer output using the component for the combination of the first layer output and the arithmetic mean of the mean for each training data of the batch, and
a step of calculating, for each feature index, an arithmetic mean of the variance for a combination including the feature index.

11. The neural network system according to claim 10, wherein generating the numerical conversion layer output includes, for each training data, a step of numerically converting each component of the first layer output of the training data using the arithmetic mean of the mean and the arithmetic mean of the variance.

12. The neural network system according to claim 11, wherein generating the numerical conversion layer output includes a step of converting the component numerically converted based on a set of transformation parameters for each feature index.

13. The neural network system according to claim 12, wherein

after the neural network system is trained, the numerical conversion layer receives a new first layer output for a new neural network input generated by the first layer,
generates a new numerically converted layer output by numerically converting each component of the new first layer output using a numerical conversion parameter calculated in advance,
generates a new numerical conversion layer output by converting, for each feature index, a component of the new numerically converted layer output based on a set of transformation parameters for the feature index, and
provides the second layer with the new numerical conversion layer output as a new layer input.

14. The neural network system according to claim 2, wherein

a plurality of components of the first layer output are indexed by a feature index and a spatial location index, and calculating the numerical conversion parameter includes
for each training data in the batch, a step of calculating, for each of the feature indexes, a mean of components for the feature index of first layer outputs of a plurality of training data selected by the selection method as a pseudo mean of components for the feature index of the first layer outputs, and
a step of calculating, for each of the dimensions, a variance of components for the feature index of the first layer outputs using the component for the feature index of the first layer output and the pseudo mean for each training data of the batch.

15. The neural network system according to claim 14, wherein generating the numerical conversion layer output includes, for each training data, a step of numerically converting the component of the first layer output of the training data using the pseudo mean and the variance for a feature index corresponding to each component.

16. The neural network system according to claim 15, wherein generating the numerical conversion layer output further includes a step of transforming the component numerically converted based on values of a set of transformation parameters for each feature index.

17. The neural network system according to claim 16, wherein

after the neural network system is trained, the numerical conversion layer receives a new first layer output for a new neural network input generated by the first layer,
generates a new numerically converted layer output by numerically converting each component of the new first layer output using a numerical conversion parameter calculated in advance,
generates a new numerical conversion layer output by converting, for each feature index, a component of the new numerically converted layer output based on a set of transformation parameters for the feature index, and
provides the second layer with the new numerical conversion layer output as a new layer input.

18. The neural network system according to any one of claims 1 to 17, wherein the first layer generates the first layer output by modifying a first layer input based on a set of parameters for the first layer

19. The neural network system according to claim 18, wherein the second layer generates a second layer output by applying a non-linear operation to the batch normalization layer output.

20. The neural network system according to any one of claims 1 to 17, wherein the first neural network layer generates the first layer output by modifying a first layer input based on current values of a set of parameters to generate a first layer input modified, and then applying a non-linear operation to the first layer input modified.

21. The neural network system according to any one of claims 1 to 20, wherein during the training of the neural network, the neural network system back propagates the numerical conversion parameter as part of adjusting a value of a parameter of the neural network.

22. The neural network system according to claim 2, wherein the predetermined selection method in calculating the numerical conversion parameter corresponding to one piece of training data selects, from a batch including a set of a plurality of pieces of training data including the one piece of training data, some training data except for the one piece of training data or all the training data.

23. A method comprising an operation implemented by the numerical conversion layer according to any one of claims 1 to 22.

24. One or a plurality of non-transitory computer storage media encoded with a computer program including instructions that, when executed by one or a plurality of computers, cause the one or the plurality of computers to execute the neural network system according to any one of claims 1 to 22.

## FIG. 1

# FIG. 2

| | | |
|---|---|---|
| BATCH | TRAINING DATA | |
| | TRAINING DATA | |
| | TRAINING DATA | |
| BATCH | TRAINING DATA | |
| | TRAINING DATA | |
| | TRAINING DATA | |
| | ⋮ | |
| BATCH | TRAINING DATA | |
| | TRAINING DATA | |
| | TRAINING DATA | |

300

TRAINING DATA GROUP

EP 4 354 342 A1

# FIG. 3

FIG. 4

EP 4 354 342 A1

# FIG. 5

# FIG. 6

411
$x_{1,p}$

421
$\widetilde{\mu}_{1,p}$

412
$x_{2,p}$

422
$\widetilde{\mu}_{2,p}$

430
$\widetilde{\sigma}_p^2$

413
$x_{3,p}$

423
$\widetilde{\mu}_{3,p}$

# FIG. 7

## FIG. 8

RECEIVE FIRST LAYER OUTPUT FOR
EACH TRAINING DATA IN BATCH ⌒S1

CALCULATE NUMERICAL CONVERSION PARAMETERS
FOR EACH TRAINING DATA IN BATCH ⌒S2

NUMERICALLY CONVERT FIRST LAYER FOR
EACH TRAINING DATA IN BATCH USING
NUMERICAL CONVERSION PARAMETERS ⌒S3

PROVIDE SECOND LAYER WITH NUMERICALLY CONVERTED
FIRST LAYER OUTPUT AS INPUT ⌒S4

## FIG. 9

RECEIVE FIRST LAYER OUTPUT OF NEURAL NETWORK SYSTEM ⌒S11

NUMERICALLY CONVERT FIRST LAYER OUTPUT
USING PREDETERMINED NUMERICAL CONVERSION PARAMETERS ⌒S12

PROVIDE SECOND LAYER WITH NUMERICALLY CONVERTED
FIRST LAYER OUTPUT AS INPUT ⌒S13

# FIG. 10

1001 — TRAINING DATA $T_1$

1011 — $x_{1,p}$

1021 — $\tilde{\mu}_{1,p}$

1002 — TRAINING DATA $T_2$

1012 — $x_{2,p}$

1022 — $\tilde{\mu}_{2,p}$

1003 — TRAINING DATA $T_3$

$x_{3,p}$ — 1013

1023 — $\tilde{\mu}_{3,p}$

1004 — TRAINING DATA $T_4$

$x_{4,p}$ — 1014

1024 — $\tilde{\mu}_{4,p}$

# FIG. 11

TRAINING DATA T$_1$ ⌒1101  ⌒1111 $x_{1,p}$  ⌒1121 $\tilde{\mu}_{1,p}$

TRAINING DATA T$_2$ ⌒1102  ⌒1112 $x_{2,p}$  ⌒1122 $\tilde{\mu}_{2,p}$

TRAINING DATA T$_3$ ⌒1103  $x_{3,p}$ ⌒1113  ⌒1123 $\tilde{\mu}_{3,p}$

TRAINING DATA T$_4$ ⌒1104  $x_{4,p}$ ⌒1114

TRAINING DATA T$_5$ ⌒1105  $x_{5,p}$ ⌒1115

TRAINING DATA T$_6$ ⌒1106  $x_{6,p}$ ⌒1116

# FIG. 12

TRAINING DATA $T_1$ — 1201

$x_{1,p}$ — 1211    $W_1$ — 1221    $\widetilde{\mu}_{1,p}$ — 1231

$x_{2,p}$ — 1212    $W_2$ — 1222

$x_{3,p}$ — 1213    $W_3$ — 1223

## INTERNATIONAL SEARCH REPORT

| International application No. |
| --- |
| **PCT/JP2021/034961** |

**A. CLASSIFICATION OF SUBJECT MATTER**

*G06N 3/04*(2006.01)i; *G06N 3/08*(2006.01)i
FI:   G06N3/08; G06N3/04

According to International Patent Classification (IPC) or to both national classification and IPC

**B. FIELDS SEARCHED**

Minimum documentation searched (classification system followed by classification symbols)

G06N3/04; G06N3/08

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2019/123544 A1 (OLYMPUS CORP) 27 June 2019 (2019-06-27) paragraphs [0011]-[0048], fig. 1-4 | 1-24 |
| A | JP 2020-506488 A (GOOGLE LLC) 27 February 2020 (2020-02-27) paragraphs [0001]-[0116] | 1-24 |
| A | JP 2020-135748 A (PREFERRED NETWORKS INC) 31 August 2020 (2020-08-31) paragraph [0066] | 1-24 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **30 November 2021** | **14 December 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

| International application No. |
|---|
| **PCT/JP2021/034961** |

| Patent document cited in search report | | | Publication date (day/month/year) | Patent family member(s) | Publication date (day/month/year) |
|---|---|---|---|---|---|
| WO | 2019/123544 | A1 | 27 June 2019 | US 2020/0320393 A1<br>paragraphs [0015]-[0057], fig. 1-4 | |
| JP | 2020-506488 | A | 27 February 2020 | WO 2018/148526 A1<br>paragraphs [0001]-[0118]<br>EP 3563306 A1<br>CN 110291540 A<br>KR 10-2019-0113952 A | |
| JP | 2020-135748 | A | 31 August 2020 | US 2020/0272901 A1<br>paragraph [0071] | |

Form PCT/ISA/210 (patent family annex) (January 2015)

**REFERENCES CITED IN THE DESCRIPTION**

**Patent documents cited in the description**

- JP 6453477 B